# EUROPEAN PATENT SPECIFICATION

(11) **EP 2 958 654 B1**
(45) Date of publication and mention of the grant of the patent: **25.12.2019**
(21) Application number: 13705166.0
(22) Date of filing: 19.02.2013
(51) Int. Cl.: B01D 53/04

(54) **SYSTEM FOR FILLING A FILTERING MATERIAL**
SYSTEM ZUM BELADEN EINES FILTERMATERIALS
SYSTEME POUR CHARGER UN MATERIAU FILTRANT

(43) Date of publication of application: 30.12.2015
(73) Proprietor: Camfil AB, 111 34 Stockholm (SE)
(72) Inventor: ISACSSON, Hampus, S-590 80 Södra Vi (SE); VAN DEN BROECK, Hevré, F-66730 Sournia (FR)
(74) Representative: AWA Sweden AB
(86) International application number: PCT/EP2013/053296
(87) International publication number: WO 2014/127807

(56) References cited:
- WO-A1-94/29001
- WO-A1-94/29001
- CN-A- 102 785 862
- DE-A1- 3 406 413
- DE-A1- 3 406 413
- US-A- 4 076 057
- US-A- 4 076 057

## Description

### FIELD OF THE INVENTION

The present invention relates to filter assemblies for removing particles from an air flow, and more particularly to a filter arrangement for treatment of air in road tunnels and equipment for maintaining the function of such filter arrangements.

### BACKGROUND OF THE INVENTION

Air within road tunnels is polluted by traffic passing therethrough, both due to exhaust fumes and through whirled up particles. Air quality within road tunnels is of importance to protect the health and well-being of users such as drivers and passengers in vehicles passing through the tunnel and also to personnel working within the tunnel such as road-workers, rescue workers and police. Shorter road tunnels are traditionally ventilated only by means of natural draught whereas longer tunnels have been ventilated by means of fans provided at one or both tunnel entrances. For even longer tunnels, additional intermediate ventilation shafts have sometimes been provided through which polluted air has been extracted. However, for certain tunnels it has been determined that intermediate ventilation shafts are not feasible due to e.g. unfeasible length thereof. In this case, the air has to be treated in-situ. Also, environmental questions may arise when polluted tunnel air is simply discharged at tunnel entrances and/or intermediate ventilations shafts. This can for example be the case when tunnels are constructed in order to reroute traffic from passing through cities or when tunnels pass under sensitive areas such as nature reserves. In these cases, tunnel air cannot simply be blown out but instead the air has to be treated prior to being exhausted. To provide such air treatment, road tunnels may be ventilated and fitted with filtration plants to remove harmful vehicle exhaust gases and particles. These filtration plants may be extremely large and contain hundreds of tons of filtration media. The filters will normally be constructed in subterranean chambers and the available space between the filter walls and particularly the headspace above the filter walls for assembly and service procedures will be extremely limited due to the heavy expenses involved in tunnel construction. The typical form of the filters is a series of more or less parallel filter walls with perforated faces that contain the filtration media. An arrangement of external baffles between pairs of walls drives the contaminated air through the filtration media beds to effect air cleaning. Each wall may be several meters long, several meters high and the wall thickness may be half a meter. A large filter arrangement of this type may contain up to 20 walls. Downtime of the ventilation system for changing the media is limited since it in most cases is not possible to close the tunnel for traffic. As a consequence of weight of media, limited downtime, limited space and health and safety considerations, procedures to change the molecular filtration media based on manual handling are inappropriate.

US 4076057 discloses a filtering arrangement with a filter wall and a filling device, which moves along the top of the filter wall for filling it with filtering material.

### SUMMARY OF THE INVENTION

It is an object of the present invention to provide a filling device for filling filtering material to filter units which reduces or eliminates the above mentioned and other drawbacks. This object and other objects are achieved by a filter arrangement according to the present invention as defined in claim 1 of the appended claims. This object and other objects are also achieved by a method as defined in claim 8. Preferred embodiments of the present invention are defined in the dependent claims.

Thus, in accordance with an aspect of the present invention there is provided a filter arrangement comprising a modular filter wall, comprising at least one vertically extending filter wall module arranged to receive and contain a filtering material, and a filling device comprising a reservoir for filtering material, wherein the filling device is arranged for filling a filtering material to said at least one vertically extending filter wall module, said filter wall module comprising a filter material extraction point, for extracting filtering material from the filter wall module, near a lower region of the filter wall module, side plates, vertically extending guide elements extending over an outer surface thereof, and horizontally extending support bars. The guide elements are arranged to guide the filling device to move vertically along said guide elements between a first position near a lower region of the filter wall module, in which first position the filling device may be charged with filtering material and a second position near an upper region of the filter wall module in which the filling device can release said filtering material to said filter wall module, and wherein the guide elements additionally act as frame members for the filter wall module.

The provision of the vertically moveable filling device, moveable along the guide element, has a number of advantages over prior art solutions. Filter walls are known, which consist of a number of individual baskets which are each filled with a filter material, for example activated carbon. When the filter material has to be replaced, due to saturation or for other reasons, the filter wall has to be demounted and each basket has to be emptied and re-filled with activated carbon and finally the wall has to be rebuilt again. This is extremely time consuming and requires that the air treatment facility is shut down during the work. Other known solutions involve filter walls were personnel have to climb the top of the filter wall for manual refilling of filter material. This is hazardous from a working environment point of view and it requires large amounts of unusable space above the filter wall which is inefficient, both from a filtering point of view as when considering the costs involved. Transporting filtering material by blowing it through pipes or hoses reduces the required ceiling height above the filter wall. However, filter material such as activated carbon is often provided in the form of granulates, such as pellets. This since granules or pellets having a diameter of approximately 1-5mm provide a good balance between air treatment efficiency and pressure drop over the filter arrangement. These granules, or pellets, are rather fragile and transportation by blowing would cause them to disintegrate due to crushing and grinding during transportation causing a high fines content in the thus delivered filtering material. The filling device of the present invention transports the filtering material in a gentle manner where interparticular crushing and grinding as well as mechanical stress on the filtering material from equipment is avoided, or at least reduced to a large extent. All in all, using a filling device according to the present invention, filter arrangements can be obtained with improved filtering characteristics, reduced pressure drop and simplified maintenance work.

In accordance with an embodiment of the invention, the filling device comprises a drive unit arranged to interact with guide elements on a surface of a filter unit. The provision of a drive on the filling device allows for the filling device to be used on any part of the filter unit.

In accordance with an embodiment of the invention, the drive unit comprises a motor and at least one driving wheel.

In accordance with an embodiment of the invention, the filling device further comprises at least one support wheel arranged to bear against a surface of the filter unit. By providing a support wheel in addition to the drive wheel, it is possible to avoid tilting of the filling device relative to the filter unit.

In accordance with an embodiment of the invention, the at least one driving wheel is provided in the form of a cogged wheel arranged to interact with guide elements provided on a surface of the filter unit, said guide elements and cogged wheel being provided with corresponding pitches. A tooth coupling between the filling device and the filter unit provides a skid-free connection and high positional accuracy since a given number of revolutions of the cogged driving wheel will always correspond to the same displacement of the filling device relative to the filter unit.

In accordance with an embodiment of the invention, the at least one driving wheel is provided near a lower region of the filling device and wherein the filling device further comprises a sliding block provided near an upper region of the filling device, said sliding block being arranged to slidingly abut a surface of said filter unit. The sliding block provides an additional safeguard against tilting of the filling device. Such tilting could cause the driving wheel to lose contact with the filter unit.

In accordance with an embodiment of the invention, the reservoir comprises a flooring which is transparent over at least parts thereof. The provision of a transparent, or at least translucent, flooring makes it possible for an operator standing on the floor below the filling device, when in an second, e.g. upper, position to determine that the charge of filtering material in the reservoir has been emptied into the filter wall. This makes the use of sensors and similar equipment redundant, or at least less necessary.

In accordance with an embodiment of the invention, the reservoir comprises a door facing the filter unit, wherein said door can be opened in order to release said filtering material to said filter unit.

In accordance with an embodiment of the invention, the door is slidably arranged in the filling device and wherein a first abutment surface is provided on said door and arranged to interact with a corresponding abutment surface on the filter unit. This means that during movement of the filling device from the first position towards the second position these abutment surfaces will come into contact with each other at a position intermediate the first and second position and any further movement of the filling device towards the second position will gradually slide the door towards a fully open position. This is a simple and reliable way of gradually opening the door without the need of any additional motors or sensors that could possibly malfunction.

In accordance with an embodiment of the invention, the door is biased towards a closed position. This ensures that as soon as the filling device moves towards the first position, the door will automatically close.

In accordance with an embodiment of the invention, a spring is provided to provide said bias.

In accordance with an embodiment of the invention, the spring is arranged in a tube provided on a bottom surface of the filling device and wherein said spring is coupled to said door by means of a wire.

In accordance with an embodiment of the invention, a disconnecting switch is provided which automatically stops the motor of said drive unit when the filling device reaches said second position.

In accordance with an embodiment of the filter arrangement of the invention, the filter unit comprises a filter wall and the at least one guide elements is provided on an outer surface of said filter wall. The second position is located near an upper region of the filter wall and the filter unit further comprises a filter material extraction point near a lower region of the filter wall.

In accordance with another aspect of the present invention, a method for in-situ filling of filtering material to a filter arrangement according is provided. The method comprises the following steps:
- positioning a filling device at the first position near a lower region of the filter wall module in engagement with the guide element;
- charging said filling device with filtering material;
- moving said filling device along the guide elements to said second position;
- extracting filtering material from the filter wall module at the extraction point near a lower region of the filter wall module while simultaneously releasing filtering material from the filling device to the filter wall module at the second position located near an upper region of the filter wall module such that the filter wall module at all times will be filled up with filtering material.

The method described above ensures that the filter wall is filled up with filtering material at all times, i.e. also during the actual replacement of filtering material. This is extremely favourable since it does not require any down time at all.

### BRIEF DESCRIPTION OF THE DRAWINGS

The invention will now be described in more detail and with reference to the appended drawings in which:
Fig. 1 is a schematic cross-sectional view of a road tunnel comprising an air treatment compartment.
Fig. 2 is a schematic perspective view of a filter wall of the invention.
Fig. 3 is a perspective view of two filter walls according to the invention.
Fig. 4 is a horizontal cross-sectional view of a segment of a filter wall of the invention.
Fig. 5 is a perspective view of a filling device of the invention.
Fig. 6 is a perspective detailed view of a filling device of the invention.
Fig. 7 is a perspective view of a filter arrangement of the invention.
Fig. 8 is an enlargement of a detail of the filter arrangement shown in figure 7.
Fig. 9a is a cross-sectional side view of a filter arrangement of the invention in a first position.
Fig. 9b is a cross-sectional side view of a filter arrangement of the invention in a second position.

### DESCRIPTION OF PREFERRED EMBODIMENTS

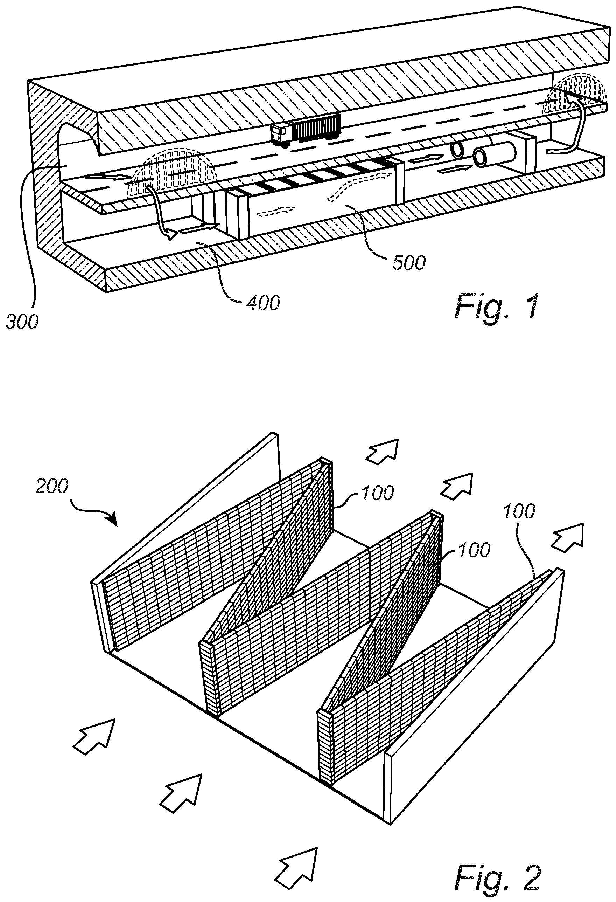

The present invention relates to filter arrangements for treatment of air, and more specifically to filter arrangements for removing e.g. nitrogen dioxide (NO₂) from air in road tunnels. This is done by providing a modular filter wall having activated carbon enclosed within the filter wall. Air is diverted, sucked or by any other suitable means forced from the road tunnel 300 to flow through an air treatment facility 500 which in this case is located in a chamber located beneath the roadway. It is of course conceivable that the air treatment facility 500 could be located above or at a side of the road tunnel as well. It is emphasized that figure 1 is only a schematic drawing of how the air treatment is performed. In reality, the size of air treatment facility 500 is reduced to the bare minimum due to the extreme costs involved in creating such chambers below ground. Within said air treatment facility 500 a number of different filtration stages may be provided depending on the requirements of the performance specification which varies from site to site. The two most common filtration stages include particulate filtration where electrostatic precipitators are by far the most common but bag filters or biofiltration may be mentioned as alternatives thereto; and denitrification using e.g. activated carbon, potassium hydroxide or other suitable filtration materials. Even though there are some synergy effects of these two stages, for example the ionizer of an electrostatic precipitator of a first treatment stage will convert at least some of the nitric oxide (NO) contained in the polluted air into nitrogen dioxide (NO₂) which then can be absorbed by the activated carbon contained in the filter wall in a second stage, the present invention is mainly directed to the latter stage and more specifically how to fill a filter wall with filtering material in an appropriate way.

As can be seen in figure 2, this stage 200 typically comprises a number of modular walls 100 arranged in a W-type manner. In reality, the walls 100 may be arranged more or less parallel to each other connected to an adjacent filter wall at an upstream end and an downstream end in an alternating manner such that no air can escape treatment.

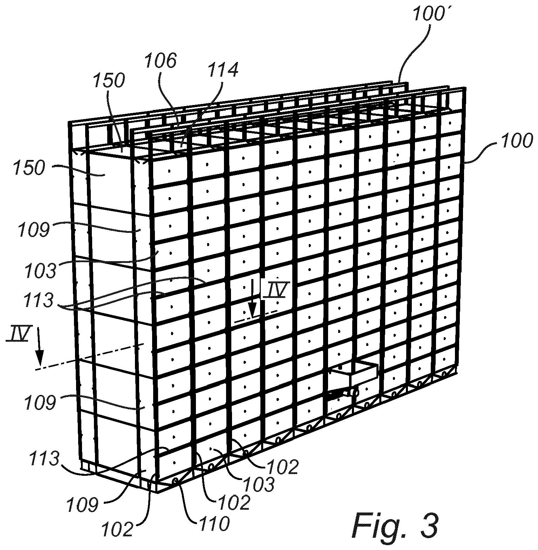

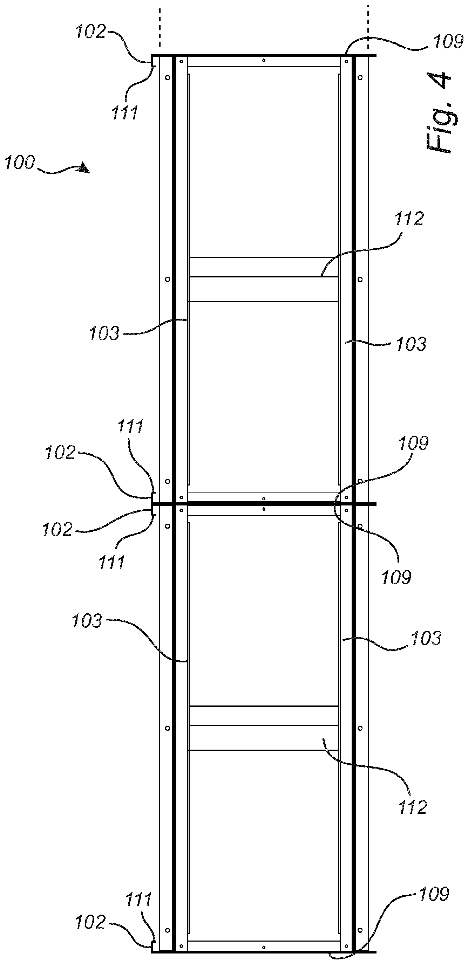

Figure 3 shows two adjacent modular filter walls 100, 100'. The modular filter walls 100, 100' are connected by a number of air duct plates 150 defining an inlet duct directing air towards an upstream side of the modular filter walls 100, 100', which in figure 3 are the respective side of modular filter walls facing each other and contained within air duct plates 150, such that all air will have to pass through the filtering material held within the modular filter walls 100, 100'. The air reaching the modular filter walls 100, 100' may come either directly from the road tunnel or from a previous upstream treatment stage, as the case may be. Obviously, the treatment stage 200 can comprise any number of modular filter walls 100, 100' but in order to understand the invention, two adjacent walls 100, 100' are enough and below, only modular filter wall 100 will be described. The modular filter wall 100 comprises a number of vertically extending filter wall modules 101, 101', 101" etc. From now on reference will only be done to filter wall module 101, while it is clear that the rest of the filter wall modules are constructed in an identical, or at least similar, manner. The filter wall module 101 comprises a substructure 110 from which the rest of the filter wall module 101 is erected. The filter wall module 101 comprises perforated sheets 103 on its upstream and downstream sides allowing air to pass through them while simultaneously keeping the filtering material in place within the filter wall module 101. In figure 3, only the perforated sheets 103 of the downstream side can be seen since the upstream side is contained by the air duct plates 150. The filter wall module 101 further comprises side plates 109 and vertically extending guide elements 102 as well as horizontally extending support bars 113. The guide elements are attached to the side plates and the support bars 113 are either directly attached to the side plates 109 or indirectly via the guide elements 102. The support bar 113 is provided with triangular attachment surfaces at both ends thereof by means of which the perforated sheets 103 are attached to the construction. In figure 4, which is a cross-sectional view through two filter wall modules 101, 101', support elements 112 can be seen which connects the central portions of two opposite perforated sheets 103 thus adding additional rigidity to the system. At the top of the filter wall module 101, guide elements 102 extend upwardly beyond the uppermost row of perforated sheets 103 and support bar 113 and a top bar 106 is arranged to extend between two adjacent guide elements 102 of filter wall module 101 thus creating an opening 114 defined by the guide elements 102, the top bar 106 and uppermost support bar 113. In this embodiment, the side plates 109 and guide elements 102 each have a height equal to the aggregated height of two perforated sheets 103 and the side plates 109 and guide elements 102 are off-set relative by the height of one perforated sheet 103 to increase strength and simplify assemblage of the filter wall. Of course, other relative dimensions are conceivable as well. As will be thoroughly described later on, guide elements 102 act both as a frame member for the filter wall module 101 as well as a guide element for the filling device 1 of the present invention.

This allows for the construction of a filter wall module 101 comprising an interior acting as a receptacle for filtering material laterally defined by the side plates 109 and vertically open such that the receptacle can be filled from top to bottom. The modular structure facilitates the erection of filter walls at locations having different space requirements. The height of the filter wall is adapted by adding a suitable number of construction elements (side plates 109, guide elements 102, perforated sheets 103, support bars 112 etc) until a desirable height is achieved. Similarly, the number of filter wall modules determines the length of the filter wall 100.

Not shown in the figures is an extraction point near a lower region of the filter wall module. Through this point, filtering material can be extracted when it has to be replaced. Since crushing of the saturated filtering material is not a problem, this can for example be done by means of a vacuum system through which the filtering material can be sucked out of the filter wall module.

Normally, during erection of filter wall module 101, i.e. during initial air treatment facility construction, filtering material is filled as each vertical step of the filter wall module 101 is completed. In this way, the granules or pellets of filtering material is not exposed to any unnecessary grinding or crushing forces that could cause them to disintegrate thereby causing a high fines content in the filter wall module, which could be the case if the filter wall module 101 is filled with filtering material only after the complete module has been erected.

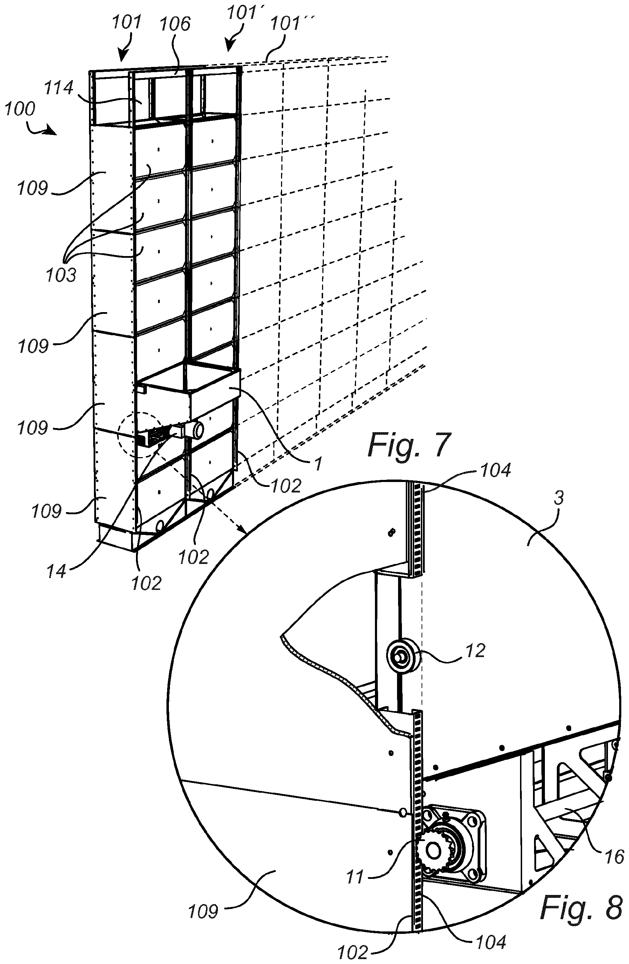

In figure 4 the cross-section of guide elements 102 can be seen. They are generally C-shaped having a base parallel to the surface of the side plate 109 to which it is attached and two legs extending in planes perpendicular to said surface. Furthermore, a leg 111 is provided on the downstream leg of the C-shape, providing additional support to filling device 1 as will be described below. The downstream leg of the guide elements 102 is perforated acting as a gear rack with which the cogged driving wheel 11 of filling device 1 can interact. This perforation 104 can be seen in figure 8.

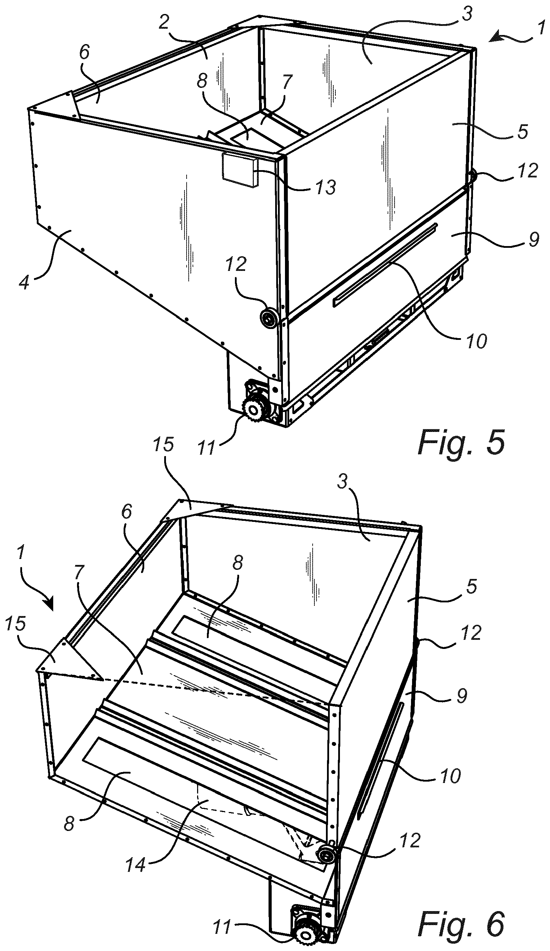

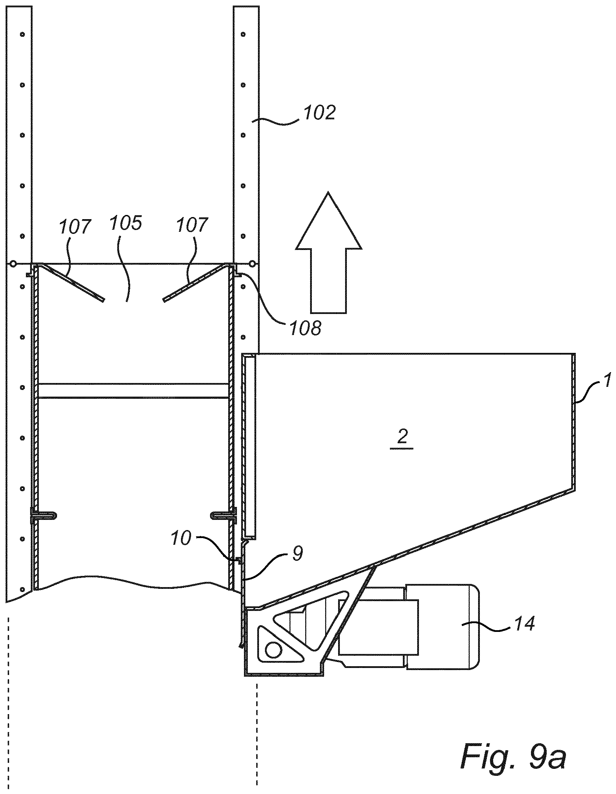

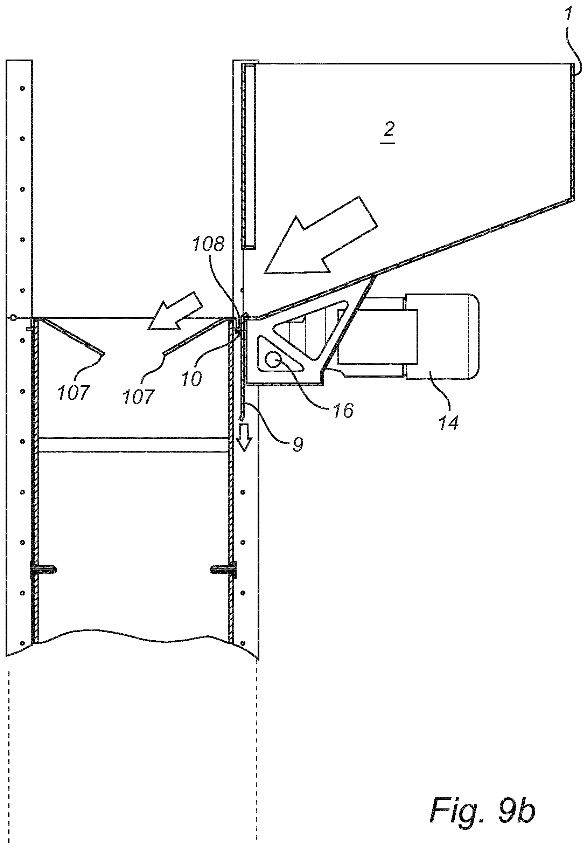

Filling device 1 and how it functions on filter wall 100 will now be described referring to figures 5-9b. Filling device 1 comprises a reservoir 2 defined by a bottom 7, side walls 3, 4, rear wall 6 and front wall 5, wherein front wall 5 comprises a slidable door 9. Further, a drive unit is provided for moving the filling device along the downstream surface of filter wall 100. This drive unit comprises an electric motor 14, drive shaft 16 and cogged driving wheel 11. A support wheel 12 is provided on each side of the filling device to provide the required system stability. In addition, sliding blocks 13 are arranged to provide additional stability such that tilting of the filling device 1 is avoided, especially when the filling device is in an uppermost position. Such tilting could cause the drive wheels to lose contact with guide elements 102. As can be seen in figures 7 and 8, filling device 1 can be connected to filter wall module 101 by inserting support wheels 12 into a lower part of guide elements 102. This is facilitated by the fact that lower parts of guide elements 102 are open on a downstream side, i.e. the downstream leg of the C-shape has been removed together with a corresponding part of leg 111. Thus, support wheel 12 is slipped into the interior of guide element 102 and the filling device 1 is subsequently moved upwards such that cogged driving wheels 11 can be brought in contact with the perforated part 104 of guide element 102. Once this is achieved, filling device 1 is able to maintain its position along the filter wall module 101 since the support wheel 12 is contained within the interior of guide element 102 and the cogged driving wheel 11 is prevented from rotation when the motor is not turning axle 16. This will provide a stable condition of the filling device relative to the filter wall module 101. The motor 14 can be controlled by an operator, for example through a wire connection or a wireless connection such that the filling device can move along the outer downstream surface of the filter wall module 101 between a first, lowermost, position in which the reservoir 2 of filling device 1 may advantageously be charged with filtering material, such as activated carbon, activated alumina or other, and a second, uppermost, position in which the reservoir 2 can be emptied into the interior of filter wall module 101 from its top. The filling device 1 comprises a slidable door 9 at a lower part of front wall 5. The door is provided with an abutment surface 10 which is intended to interact with a corresponding abutment surface 108 provided at the filter wall module 101 near an upper region thereof. As the filling device 1 approaches its second, uppermost position these abutment surfaces 10, 108 will come into contact with each other and as the filling device 1 continues to move they will gradually slide the door 9 open such that the filtering material contained in reservoir 2 may flow through the door 9 and opening 114 and into passageway 105 into the interior of filter wall module 101, see in this respect especially figures 9a and 9b. Passageway 105 has a funnel shape defined by shield plates 107. These shield plates 107 also creates a trap preventing air to pass through the filter wall module 101 without passing through the filtering material. During use, the filtering material will settle which could create an opening through the filter wall module 101, which of course is highly undesirable. Since shield plates 107 are directed downwardly any air passing through the filter wall module 101 will be diverted downwardly and the filtering material would have to settle to a level below the lower tip of shield plates 107 for a direct opening to be created. Therefore, by dimensioning the shield plates correctly, the creation of such opening can be avoided.

Normally, the filtering material in a filter wall module 101 is replaced as follows: When it is determined that the filtering material, e.g. activated carbon, needs to be replaced due to saturation or for other reasons, the filling device 1 is charged with new filtering material and is thereafter moved to its second, uppermost position, or at least near that position, such that the door 9 is at least partially open. Since the filter wall module 101 is already full of filtering material no, or only little filtering material will leave the filling device 1, e.g. compensating for any settlement that may have taken place in the old filtering material. Then the operator extracts old filtering material from the extraction point near the bottom of the filter wall module 101 and as this is done the reservoir of the filling device 1 will be emptied simultaneously as the filtering material within the filter wall module 101 is extracted. As soon as the operator can see through the transparent or translucent areas 8 extraction is brought to a stop and the filling device 1 is moved back to its first, lowermost position where it can be charged with more filtering material. This is repeated until the whole filter wall module 101 has been filled with new, fresh filtering material. To facilitate the determination of this complete replenishment, it is suggested that the first charge of filtering material is mixed with an amount of indicator powder having a distinct color differing from that of the filtering material. By doing so, it is simple to confirm that all old filtering material has been extracted from the filter wall module 101. When using activated carbon as filtering material, talcum could be used as such indicator. It is evident from above that, with a filling device 1 according to the present invention, the filtering material can be replaced during operation of the air treatment facility. This since at all times is the filter wall module 101 filled with filtering material. This is extremely advantageous since neither will traffic in the road tunnel have to be restricted, nor will the air quality be reduced. Not even during replenishment of filtering material.

A disconnection switch, not shown in the figures, can be arranged at the filling device 1 arranged to automatically turn off the motor when the filling device 1 has reached an uppermost position. A control unit may also be provided that causes the filling device to shake when in the uppermost position by alternately moving upwards and downwards thereby increasing the flow speed of the filtering material from the filling device.

As indicated in figures 5 and 6, parts 8 of the bottom of the reservoir 2 can be made from a transparent or translucent material. This has the advantage that an operator standing on the ground is able to immediately determine that the charge of filtering material in the reservoir 2 has been emptied into the filter wall module 101 by simply taking a look. Without this solution, the operator would have to rely on error prone sensors or even be forced to guesstimate if the reservoir is empty or not. The bottom 7, including any transparent or translucent sections, is preferably inclined towards the front wall 5 such that filtering material will flow through the door 9 towards the filter wall module as soon as the door 9 opens.

As soon as a first filter wall module 101 has been filled with filtering material, it is easy for an operator, possibly with the help of a colleague, to remove the filling device 1 from that filter wall module 101 and connect it with a next filter wall module 101'. This diminishes the need of numerous or very large filling devices covering more than one filter wall module.

Finally, it is realized that a filling device 1 according to the present invention has a number of advantages over alternative filling arrangements. For example it is known to have personnel working on top of filter walls in order to fill and refill the filter walls. This is undesirable from many points of view. Working environment is one, another is the fact that it requires substantial free ceiling height which is extremely expensive. Transporting the filtering material by blowing it through pipes or hoses is another alternative which reduces the need for substantial ceiling heights but instead has the disadvantage that the filtering material is crushed during transportation causing the filtering material when in place within the filter wall to comprise high fines content which in turn causes the pressure drop over the filter wall to increase to unacceptable levels. The filling device 1 according to the present invention can be charged from a big bag with no or little drop, i.e. the discharging point of the bag can be kept close to the bottom 7 of the reservoir 2 during charging thereof. During transportation in the filling device 1 towards the upper region of the filter wall no, or at least very little, forces act on the filtering material such that very little crushing or grinding of the granules or pellets take place. The emptying of the reservoir 2 into the filter wall module is again very gentle on the filtering material since the height of fall is very limited, it is actually more of a flowing motion and not so much a fall.

## Claims

1. A filter arrangement comprising a modular filter wall (100) comprising at least one vertically extending filter wall module (101) arranged to receive and contain a filtering material, and a filling device (1) comprising a reservoir (2) for filtering material, wherein the filling device is arranged for filling a filtering material to said at least one vertically extending filter wall module, said filter wall module comprising a filter material extraction point, for extracting filtering material from the filter wall module, near a lower region of the filter wall module, side plates (109), vertically extending guide elements (102) extending over an outer surface thereof, and horizontally extending support bars (113), wherein the guide elements are arranged to guide the filling device (1) to move vertically along said guide elements (102) between a first position near a lower region of the filter wall module, in which first position the filling device (1) may be charged with filtering material and a second position near an upper region of the filter wall module in which the filling device (1) can release said filtering material to said filter wall module, and wherein the guide elements additionally act as frame members for the filter wall module.

2. The filter arrangement according to claim 1, wherein the filling device comprises at least one driving wheel (11), which is provided in the form of a cogged wheel arranged to interact with at least one of the vertically extending guide elements (102), said cogged wheel being provided with corresponding pitches.

3. The filter arrangement according to claim 1 or 2, wherein the reservoir (2) comprises a flooring (7) which is transparent over at least parts (8) thereof.

4. The filter arrangement according to any one of the preceding claims, wherein the reservoir (2) comprises a door (9) facing the filter wall module, wherein said door (9) can be opened in order to release said filtering material to said filter wall module. wherein said door (9) is slidably arranged in the filling device (1) and wherein a first abutment surface (10) is provided on said door (9) and arranged to interact with a corresponding second abutment surface (108) on the filter wall module, such that during movement of the filling device (1) from said first position towards said second position said first abutment surface (10) and said second abutment surface (108) will come into contact with each other at a position intermediate said first position and said second position and further movement of the filling device (1) towards said second position will gradually slide the door (9) towards an open position.

5. The filter arrangement according to claim 4, wherein said door (9) is biased towards a closed position.

6. The filter arrangement according to any one of the preceding claims comprising a plurality of vertically extending filter wall modules, wherein the filling device is removably engaged with said vertically extending guide elements.

7. A method for in-situ filling of filtering material to a modular filter wall according to claim 1, comprising the following steps:
- positioning a filling device (1) at the first position near a lower region of the filter wall module (101) in engagement with the guide elements;
- charging said filling device (1) with filtering material;
- moving said filling device (1) along the guide elements to the second position; and
- extracting filtering material from the filter wall module (101) at the extraction point near a lower region of the filter wall module (101) while simultaneously releasing filtering material from the filling device (1) to the filter wall module (101) at the second position located near an upper region of the filter wall module (101) such that the filter wall module (101) at all times will be filled up with filtering material.

8. The method according to claim 7, wherein the modular filter wall comprises multiple vertically extending filter wall modules, the method further comprising:
- when the filter wall module has been fully refilled, removing the filling device from the filter wall module and positioning the filling device at an adjacent filter wall module for filling the adjacent filter wall module.

## Patentansprüche

1. Filteranordnung, umfassend eine modulare Filterwand (100), umfassend mindestens ein vertikal verlaufendes Filterwandmodul (101), das angeordnet ist, um ein Filtermaterial aufzunehmen und zu enthalten, und eine Füllvorrichtung (1), umfassend ein Reservoir (2) für Filtermaterial, wobei die Füllvorrichtung angeordnet ist, um ein Filtermaterial in das mindestens eine vertikal verlaufende Filterwandmodul zu füllen, welches Filterwandmodul einen Filtermaterial-Entnahmepunkt in der Nähe eines unteren Bereichs des Filterwandmoduls, um Filtermaterial aus dem Filterwandmodul zu entnehmen, Seitenplatten (109), vertikal verlaufende Leitelemente (102), die über eine seiner Außenflächen verlaufen, und horizontal verlaufende Stützstangen (113) umfasst, wobei die Leitelemente angeordnet sind, um die Füllvorrichtung (1) zu leiten, sich vertikal entlang der Leitelemente (102) zwischen einer ersten Position in der Nähe eines unteren Bereichs des Filterwandmoduls, in der die Füllvorrichtung (1) mit Filtermaterial beschickt werden kann, und einer zweiten Position in der Nähe eines oberen Bereichs des Filterwandmoduls, in der die Füllvorrichtung (1) das Filtermaterial an das Filterwandmodul abgeben kann, zu bewegen, und wobei die Leitelemente zusätzlich als Rahmenglieder für das Filterwandmodul wirken.

2. Filteranordnung nach Anspruch 1, wobei die Füllvorrichtung mindestens ein Antriebsrad (11) umfasst, das in Form eines gezahnten Rads bereitgestellt ist, das angeordnet ist, um mit mindestens einem der vertikal verlaufenden Leitelemente (102) zusammenzuwirken, welches gezahnte Rad mit einer entsprechenden Teilung bereitgestellt ist.

3. Filteranordnung nach Anspruch 1 oder 2, wobei das Reservoir (2) einen Fußboden (7) umfasst, der zumindest über Teile (8) davon transparent ist.

4. Filteranordnung nach einem der vorhergehenden Ansprüche, wobei das Reservoir (2) eine dem Filterwandmodul zugewandte Tür (9) umfasst, wobei die Tür (9) geöffnet werden kann, um das Filtermaterial an das Filterwandmodul abzugeben, wobei die Tür (9) verschiebbar in der Füllvorrichtung (1) angeordnet ist und wobei eine erste Anlagefläche (10) auf der Tür (9) bereitgestellt und angeordnet ist, um mit einer entsprechenden zweiten Anlagefläche (108) auf dem Filterwandmodul zusammenzuwirken, derart, dass während einer Bewegung der Füllvorrichtung (1) von der ersten Position in Richtung der zweiten Position die erste Anlagefläche (10) und die zweite Anlagefläche (108) in einer zwischen der ersten Position und der zweiten Position liegenden Position miteinander in Kontakt kommen und eine weitere Bewegung der Füllvorrichtung (1) in Richtung der zweiten Position die Tür (9) schrittweise in Richtung einer offenen Position verschiebt.

5. Filteranordnung nach Anspruch 4, wobei die Tür (9) in Richtung einer geschlossenen Position vorgespannt ist.

6. Filteranordnung nach einem der vorhergehenden Ansprüche, umfassend eine Vielzahl vertikal verlaufender Filterwandmodule, wobei die Füllvorrichtung mit den vertikal verlaufenden Leitelementen in lösbarem Eingriff steht.

7. Verfahren zum *in-situ-*Füllen von Filtermaterial in eine modulare Filterwand nach Anspruch 1, umfassend die folgenden Schritte:
- Positionieren einer Füllvorrichtung (1) in der ersten Position in der Nähe eines unteren Bereichs des Filterwandmoduls (101) in Eingriff mit den Leitelementen;
- Beschicken der Füllvorrichtung (1) mit Filtermaterial;
- Bewegen der Füllvorrichtung (1) entlang der Leitelemente in die zweite Position; und
- Entnehmen von Filtermaterial aus dem Filterwandmodul (101) am Entnahmepunkt in der Nähe eines unteren Bereichs des Filterwandmoduls (101) während eines gleichzeitigen Abgebens von Filtermaterial aus der Füllvorrichtung (1) an das Filterwandmodul (101) in der zweiten Position, die sich in der Nähe eines oberen Bereichs des Filterwandmoduls (101) befindet, derart, dass das Filterwandmodul (101) jederzeit mit Filtermaterial aufgefüllt ist.

8. Verfahren nach Anspruch 7, wobei die modulare Filterwand mehrere vertikal verlaufende Filterwandmodule umfasst, wobei das Verfahren ferner umfasst:
- Entfernen der Füllvorrichtung von dem Filterwandmodul, wenn das Filterwandmodul vollständig nachgefüllt ist, und Positionieren der Füllvorrichtung an einem angrenzenden Filterwandmodul, um das angrenzende Filterwandmodul zu füllen.

## Revendications

1. Agencement de filtre comprenant une paroi de filtre modulaire (100) comprenant au moins un module de paroi de filtre à étendue verticale (101) agencé pour recevoir et contenir un matériau de filtration, et un dispositif de remplissage (1) comprenant un réservoir (2) pour le matériau de filtration, le dispositif de remplissage étant agencé pour remplir ledit au moins un module de paroi de filtre à étendue verticale avec un matériau de filtration, ledit module de paroi de filtre comprenant un point d'extraction du matériau de filtration, pour l'extraction du matériau de filtration du module de paroi de filtre, à proximité d'une région inférieure du module de paroi de filtre, des plaques latérales (109), des éléments de guidage à étendue verticale (102) qui s'étendent sur une surface extérieure de celles-ci, et des barres de support à étendue horizontale (113), les éléments de guidage étant agencés pour guider le dispositif de remplissage (1) à se déplacer verticalement le long desdits éléments de guidage (102) entre une première position à proximité d'une région inférieure du module de paroi de filtre, à laquelle première position le dispositif de remplissage (1) peut être chargé avec un matériau de filtration, et une seconde position à proximité d'une région supérieure du module de paroi de filtre à laquelle le dispositif de remplissage (1) peut décharger ledit matériau de filtration dans ledit module de paroi de filtre, et les éléments de guidage agissant en outre en tant qu'éléments d'encadrement pour le module de paroi de filtre.

2. Agencement de filtre selon la revendication 1, dans lequel le dispositif de remplissage comprend au moins une roue d'entraînement (11), qui est prévue sous la forme d'une roue dentée agencée pour interagir avec au moins un des éléments de guidage à étendue verticale (102), ladite roue dentée présentant des pas correspondants.

3. Agencement de filtre selon la revendication 1 ou 2, dans lequel le réservoir (2) comprend un fond (7) qui est transparent au moins dans des parties (8) de celui-ci.

4. Agencement de filtre selon l'une quelconque des revendications précédentes, dans lequel le réservoir (2) comprend une porte (9) orientée vers le module de paroi de filtre, ladite porte (9) pouvant être ouverte afin de décharger ledit matériau de filtration dans ledit module de paroi de filtre, ladite porte (9) étant agencée coulissante dans le dispositif de remplissage (1), et une première surface de butée (10) étant prévue sur ladite porte (9) et agencée pour interagir avec une seconde surface de butée correspondante (108) sur le module de paroi de filtre, de telle sorte que pendant un déplacement du dispositif de remplissage (1) de ladite première position vers ladite seconde position, ladite première surface de butée (10) et ladite seconde surface de butée (108) viennent en contact l'une contre l'autre à une position située entre ladite première position et ladite seconde position, et un déplacement supplémentaire du dispositif de remplissage (1) vers ladite seconde position fait graduellement coulisser la porte (9) vers une position ouverte.

5. Agencement de filtre selon la revendication 4, dans lequel ladite porte (9) est sollicitée vers une position fermée.

6. Agencement de filtre selon l'une quelconque des revendications précédentes, comprenant une pluralité de modules de paroi de filtre à étendue verticale, le dispositif de remplissage étant en prise amovible avec lesdits éléments de guidage à étendue verticale.

7. Procédé de remplissage in-situ d'une paroi de filtre modulaire selon la revendication 1 avec un matériau de filtration, comprenant les étapes suivantes :
- le positionnement d'un dispositif de remplissage (1) à la première position à proximité d'une région inférieure du module de paroi de filtre (101) en prise avec les éléments de guidage ;
- le chargement dudit dispositif de remplissage (1) avec un matériau de filtration ;
- le déplacement dudit dispositif de remplissage (1) le long des éléments de guidage vers la seconde position ; et
- l'extraction du matériau de filtration hors du module de paroi de filtre (101) au point d'extraction à proximité d'une région inférieure du module de paroi de filtre (101), avec un déchargement simultané du matériau de filtration hors du dispositif de remplissage (1) vers le module de paroi de filtre (101) à la seconde position située à proximité d'une région supérieure du module de paroi de filtre (101) de telle sorte que le module de paroi de filtre (101) soit à tout moment rempli de matériau de filtration.

8. Procédé selon la revendication 7, dans lequel la paroi de filtre modulaire comprend plusieurs modules de paroi de filtre à étendue verticale, le procédé comprenant en outre :
- lorsque le module de paroi de filtre a été entièrement rempli à nouveau, le retrait du dispositif de remplissage par rapport au module de paroi de filtre et le positionnement du dispositif de remplissage au niveau d'un module de paroi de filtre adjacent afin de remplir le module de paroi de filtre adjacent.
